## Europäisches Patentamt

## European Patent Office

## Office européen des brevets

(11) Veröffentlichungsnummer: **0 157 939**
**B1**

(12) # EUROPÄISCHE PATENTSCHRIFT

(45) Veröffentlichungstag der Patentschrift:
**12.10.88**

(51) Int. Cl.⁴: **C 01 B 13/02**, B 01 D 53/04

(21) Anmeldenummer: **84115814.0**

(22) Anmeldetag: **19.12.84**

(54) Verfahren zur Gewinnung von Sauerstoff mit einem geringen Argon-Anteil aus Luft.

(30) Priorität: **26.01.84  DE 3402533**

(43) Veröffentlichungstag der Anmeldung:
**16.10.85 Patentblatt 85/42**

(45) Bekanntmachung des Hinweises auf die Patenterteilung:
**12.10.88 Patentblatt 88/41**

(84) Benannte Vertragsstaaten:
**BE DE FR GB IT NL**

(56) Entgegenhaltungen:
**DE-A-1 544 064**
**DE-A-2 855 626**

(73) Patentinhaber: **Bergwerksverband GmbH, Franz-Fischer- Weg 61, D-4300 Essen 13 (DE)**

(72) Erfinder: **Richter, Ekkehard, Dr.,
Schmachtenbergstrasse 89, D-4300 Essen 18 (DE)**
Erfinder: **Knoblauch, Karl, Dr., Semperstrasse 55,
D-4300 Essen 1 (DE)**
Erfinder: **Schlegel, Rolf, Schützenstrasse 66, D-4390
Gladbeck (DE)**
Erfinder: **Körbächer, Werner, Striepens Weg 4,
D-4330 Mülheim/Ruhr (DE)**

EP 0 157 939 B1

LIBER, STOCKHOLM 1988

# 0 157 939

## Beschreibung

Die Erfindung betrifft ein Verfahren zur Gewinnung von Sauerstoff mit einem geringen Argon-Anteil aus Luft unter Verwendung von zwei im Druckwechselbetrieb betriebenen, jeweils mindestens zwei Adsorptionsbetten aufweisenden, hintereinandergeschalteten Adsorptionseinheiten, nämlich einer ersten Kohlenstoffmolekularsieb-Adsorptionseinheit, deren Arbeitszyklen jeweils eine Beladungs- und eine Desorptionsphase umfassen, wobei aus der ersten Adsorptionseinheit ein Zwischenprodukt mit gegenüber dem ursprünglichen Gasgemisch erhöhtem Sauerstoff-, jedoch einem verringerten Argonanteil, während der Desorption gewonnen und der zweiten Adsorptionseinheit zugeführt wird, aus welcher ein Produkt mit noch weiter erhöhtem Sauerstoffgehalt gewonnen und der Stickstoff entfernt wird, während aus der zweiten Adsorptionseinheit jeweils in der Beladungsphase das Produktgas und in der Desorptionsphase ein Nebenprodukt gewonnen wird.

Sauerstoff mit einer hohen Reinheit von wenigstens 99,5 Vol.-% wird bei vielen Anwendungen in der Technik, beispielsweise in der Schweißtechnik beim Brennschneiden, oder in der Medizin benötigt. Die gebräuchliche Methode zur Gewinnung von Sauerstoff ist die Tieftemperaturzerlegung von Luft. Dieses Verfahren erfordert jedoch hohe Investitionskosten, so daß es aus energetischen Gesichtspunkten nur bei Anlagen mit großen Produktgasmengen interessant ist. Für kleinere Verbraucher wird Sauerstoff in der Regel in flüssiger Form angeliefert und in einem Kaltwasservergaser beim Verbraucher gespeichert. Dieses Versorgungsprinzip hat für die Abnehmer den Nachteil, daß der Sauerstoffpreis stark von den Transportkosten abhängt, was sich vor allem in Ländern mit geringer Industrialisierung bemerkbar macht. Außerdem kann diese Versorgungsart leicht, durch z. B. schlechte Verkehrssituationen, Unruhen usw., gefährdet werden.

Aus der DE-A-2 855 626 ist bereits ein Verfahren zur Gewinnung von Sauerstoff aus Gasgemischen, bestehend aus $N_2/O_2/Ar$ mit einer Reinheit über 99,5 Vol.-%, bekannt. Dieses Verfahren wird im Druckwechselbetrieb in einer Kohlenstoffmolekularsieb-Adsorptionseinheit betrieben. Die Kohlenstoffmolekularsieb-Adsorptionseinheit weist vorzugsweise zwei Adsorptionsbetten aus, deren Arbeitszyklen jeweils eine Beladungs- und eine Desorptionsphase umfassen, wobei die Arbeitszyklen in beiden Adsorptionsbetten gegeneinander Phasenverschoben sind. Die Adsorptionsbetten dieser ersten Einheit sind mit einem Kohlenstoff-Molekularsieb gefüllt und erzeugen ein Zwischenprodukt, daß an Sauerstoff gegenüber dem aufgegebenen $N_2/O_2/Ar$-Gemisch angereichert, dagegen an Argon verarmt ist.

Dieses Gasgemisch wird in der Kohlenstoffmolekularsieb-Adsorptionseinheit während der Desorptionsphase gewonnen. In der anschließenden Zeolith-Adsorptionseinheit, die gleichfalls vorzugsweise aus zwei Adsorptionsbetten besteht, wird der Stickstoff aus dem Gasgemisch entfernt, während der Argonanteil beim Durchgang durch die Zeolith-Adsorptionseinheit nicht adsorbiert wird. Wird das bekannte Verfahren mit einer trockenen, kohlendioxidfreien Luft betrieben, wird Sauerstoff mit einer Reinheit von 99,7 Vol.-% gewonnen. Dieses Produktgas wird in der Zeolith-Adsorptionseinheit in der Adsorptionsphase gewonnen. Da die Trocknung der Luft nur wahlweise betrieben wird, im Regelfall aber offenbar fortfallen kann, ist die Menge des anfallenden Abgases größer auf Kosten einer kleineren Produktgasmenge. Außerdem verlangt die Fraktionierung des bei der Desorption aus der Kohle-Adsorptionseinheit gewonnenen Gases zwei Zwischenspeicher für dieses Gas. Ein weiterer Nachteil besteht darin, daß das bekannte Verfahren große Adsorber erfordert, da das Verfahren bei Normaldruck betrieben wird. Ferner werden zwei Vakuumpumpen (für jede Stufe eine) benötigt.

Der Erfindung liegt daher die Aufgabe zugrunde, ein Verfahren der eingangs genannten Art so zu verbessern, daß man eine große Menge an Sauerstoff höchster Reinheit aus Luft unter Verringerung der Abgasmenge erhält.

Diese Aufgabe wird gemäß der Erfindung durch die im kennzeichnenden Teil angegebenen Maßnahmen gelöst die darin bestehen, daß in der zweiten Adsorptionseinheit die Adsorptionsbetten in Zyklen mit der doppelten Dauer wie die Zyklen der Adsorptionsbetten in der ersten Adsorptionseinheit betrieben werden, wobei die Regenerierung der zweiten Adsorptionseinheit unterbrochen wird, während mit einer gemeinsamen Vakuumpumpe für beide Adsorptionseinheiten die erste Adsorptionseinheit regeneriert wird.

Die Erfindung bringt den technischen Fortschritt, daß durch eine Integration der Trocknung der Luft gleichzeitig ein hochreines Sauerstoffprodukt in einer großen Produktgasmenge gewonnen wird.

Durch die erfindungsgemäßen Maßnahmen kann auf Zwischenspeicher verzichtet werden, es werden nur kleine Adsorber sowie lediglich eine Vakuumpumpe benötigt.

Zur erfindungsgemäßen Arbeitsweise ist folgendes auszuführen. Es ist bekannt, daß beim Regenerieren eines Adsorbers, der mit einem zeolithischen Molekularsieb gefüllt ist, während der bei Normaldruck beginnenden Evakuierung zu Beginn sehr viel Gas mit einer relativ starken Druckabsenkung abgesaugt wird. Um den Adsorber so zu regenerieren, daß während der nachfolgenden Adsorptionsphase ein hochreines Gas gewonnen wird, müssen diejenigen Moleküle so gut wie vollständig vom Adsorptionsmittel desorbieren, die während der Adsorption aus dem Gasgemisch abgetrennt werden sollen. Diese stärker adsorbierenden Moleküle desorbieren erfahrungsgemäß relativ schlecht. Dies bedeutet lange Evakuierungszeiten und macht niedrige Absolutdrücke erforderlich, wenn die Restbeladungen sehr gering werden sollen. Überraschenderweise wurde erfindungsgemäß gefunden, daß die Vakuumpumpe zwischenzeitlich für 1 bis 2 min ausgeschaltet werden kann, ohne daß die Regenerierung des Adsorptionsmittels wesentlich beeinträchtigt wird, wenn der Druck im Adsorber innerhalb von 1 min bereits von 1 bar auf Werte unter 100 mbar wird. Dies führt zu einem geringfügigen Druckanstieg im Adsorber, der unter 20 mbar bleibt. Dieser Anstieg ist auf die

2

Desorption weiterer Moleküle zurückzuführen. Während einer anschließenden weiteren Evakuierung über 1 min hinaus wird nur geringfügig weniger Gas abgesaugt als bei einer ununterbrochenen Absaugung über die Stillstandszeit und die nachfolgende Absaugphase.

Die offensichtlich sehr langsame Desorption von zeolithischem Molekularsieb überrascht insofern, als sich eine weitestgehende Regeneration von Kohlenstoffmolekularsieben in einer viel kürzeren Zeit erreichen läßt. Die Möglichkeit, die Evakuierung eines Adsorbers mit zeolithischen Molekurlarsieben zwischenzeitlich zu unterbrechen, bringt zwei wesentliche Vorteile mit sich: Einmal kann die Evakuierungsarbeit während eines Regenerationsschrittes gegenüber der ununterbrochenen Evakuierung verringert werden und außerdem kann die Vakuumpumpe während der Unterbrechung für eine andere Aufgabe genutzt werden.

Es ist an sich keine besondere Maßnahme, die Vakuumpumpe in den Stillstandzeiten mit anderen Adsorbern zu verbinden, wenn das bei dieser zwischenzeitlichen Evakuierung abgesaugte Gas verworfen wird. Es ist bei der vorliegenden Erfindung aber gelungen, die Adsorber so aufeinander abzustimmen, daß das bei der Evakuierung der Kohlenstoffmolekularsiebstufe gewonnene Gas in dem anderen zeolithischen Molekularsiebadsorber, der gerade nicht evakuiert wird, aufgenommen werden kann.

Würden die Adsorber der Zeolithstufe allein mit einem Gas beladen, das während der Evakuierung der Kohlenstoffmolekularsiebstufe anfällt, so könnte die Beladung nur über die Zeitintervalle der Evakuierung erfolgen; es würden sich deshalb während der Beladungsdauer zwei entsprechende Totzeiten ergeben. Überraschenderweise ist es erfindungsgemäß gelungen, die Kohlenstoffmolekularsiebadsorber in einer Weise zu betreiben, daß ein Entspannungsgas anfällt, das mit seinem gegenüber Luft höheren Sauerstoff- und niedrigerem Argonanteil für die Weiterverarbeitung in der Zeolithstufe geeignet ist. Dieses Gas kann aber nur dann gewonnen werden, wenn der Kohlenstoffmolekularsiebadsorber bei einem Druck beladen wird, der über dem Umgebungsdruck liegt. Bei einem Druck über 4 bar enthält der Kohlenstoffmolekularsiebadsorber am Ende des Beladungsvorgangs Luft im Leervolumen (Totvolumen und Zwischenkornvolumen) sowie ein sauerstoffangereichertes Gas in den Molekularsiebkörnern. Durch den schnellen Entspannungsvorgang strömt ein Gemisch aus Luft und desorbierendem Gas aus dem Adsorber. Die Konzentration des Sauerstoffs steigt und die des Argons fällt gegen Ende der Entspannung, so daß dieses Gas für die Weiterverarbeitung in der Zeolithstufe geeignet ist.

Es ist daher überraschend, daß sich beim erfindungsgemäßen Verfahren die Gasmengen in folgender Weise verwenden lassen, wenn nur eine gemeinsame Vakuumpumpe verwendet wird:

- Die zweimal aus dem Kohlenstoffmolekularsieb während der Entspannung und der Evakuierung abgezogene Gasmenge ist eine ausreichende Gasmenge zur Beladung des Zeolithmolekularsiebs.
- Die Restbeladung des Kohlenstoffmolekularsiebadsorbers ist nach einer Evakuierung über die halbe Zyklenzeit ausreichend niedrig, um nach der nachfolgenden Beladung genügend sauerstoffreiches/argonarmes Gas zu liefern.
- Die Restbeladung des Zeolithadsorbers ist nach der unterbrochenen Evakuierung hinreichend niedrig, so daß bei der nachfolgenden Beladung ein praktisch stickstofffreies Gas den Adsorber verläßt.

Ein Ausführungsbeispiel der Erfindung wird nachstehend mit Bezug auf die anliegenden Zeichnungen im einzelnen näher beschrieben. Es zeigen:

Fig. 1    ein vereinfachtes Fließschema der Anlage mit einer vor die Kohlenstoffmolekularsieb-Adsorptionseinheit integrierten Trocknungseinheit zur Gewinnung einer Höchstmenge aus hochreinem Sauerstoff aus Luft,

Fig. 2    eine ins einzelne gehende Darstellung der Anlage nach Fig. 1 und

Fig. 3    ein Schaltschema, das die Stellung der Ventile und die Arbeitsweise der Adsorptionsbetten einer Anlage nach Fig. 1 und 2 zeigt.

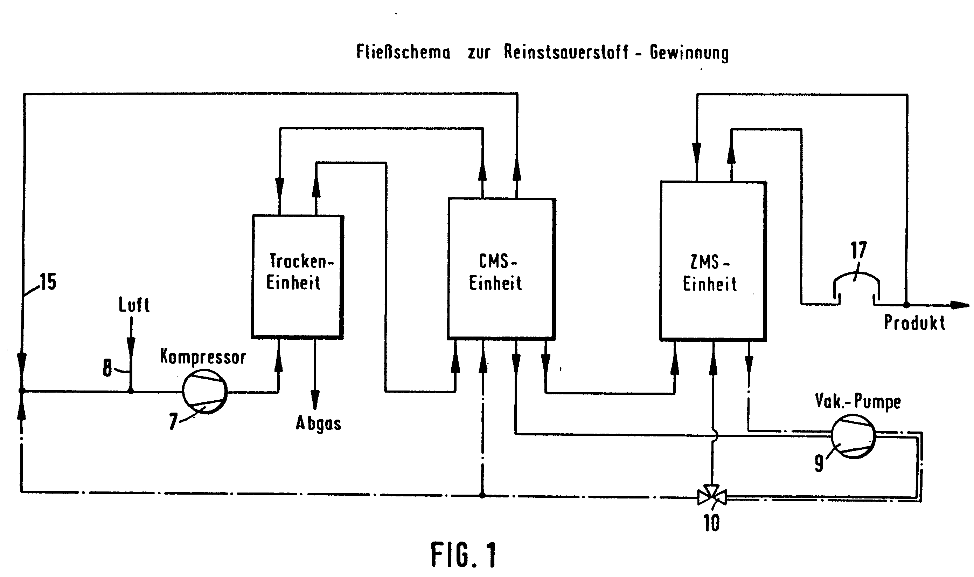

In Fig. 1 ist der prinzipielle Aufbau der Anlage zur Sauerstoffgewinnung in vereinfachter Form dargestellt. Ein Gemisch aus durch Leitung 8 zugeführter feuchter Luft und einer Mischung aus sauerstoffangereichertem und argonabgereichertem Abgas aus der Rückführleitung 15 wird über den Kompressor 7 einer Druckwechsel-Trocknungseinheit zugeführt, wo der Wasserdampf, nachdem der Wasserdampfanteil bereits nach der Kompression gesunken ist, aus dem Gasgemisch entfernt wird. Eine Druckwechseltrocknung kann somit ohne Aufwand in das Gewinnungsverfahren integriert werden. Die Trockeneinheit wird im entspannten Zustand (bei Umgebungsdruck) regeneriert, wobei als Spülgas ein Abgas aus der Kohle-Adsorptionseinheit verwendet wird, während in diese das getrocknete Gasgemisch gelangt. In der Kohlenstoffmolekularsieb-Adsorptionseinheit wird eine wesentliche Sauerstoffanreicherung bei gleichzeitiger Abnahme des Argonanteils erzielt. Darauf gelangt das Gasgemisch in die Zeolith-Adsorptionseinheit, die mit einem Zeolith 13X gefüllt ist, wo ein Sauerstoffgas mit über 99,5 Vol.-% Sauerstoff erzeugt wird. In beiden Adsorptionseinheiten fallen drei Abgasströme an, von denen einer, der vorwiegend Stickstoff und Argon, dagegen relativ wenig Sauerstoff, enthält, zur Regeneration in der Trocknungseinheit verwendet wird. Die beiden anderen Abgase enthalten relativ mehr Sauerstoff und weniger Argon als Luft. Einer wird mit der Vakuumpumpe 9 über das Ventil 10 in die Rückführleitung 15 zurückgeführt. Der andere fällt bei der Gleichstromentspannung der Kohlenstoffmolekularsieb-Einheit an und gelangt gleichfalls in die Rückführleitung 15. Auf diese Weise strömt ein Gasgemisch in die Druckwechseladsorber, das bereits gegenüber Luft an Sauerstoff angereichert und dessen Argon-Gehalt verringert ist. Der Druckaufbau in der Zeolith-Adsorptionseinheit erfolgt mit Sauerstoffreingas auf dem Druckaufbauspeicher 17.

**0 157 939**

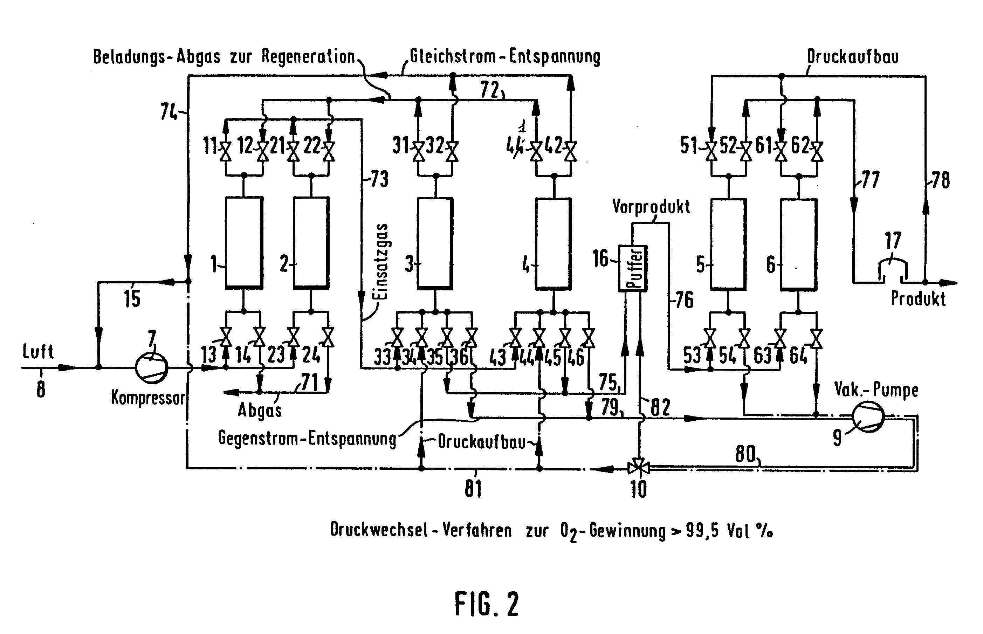

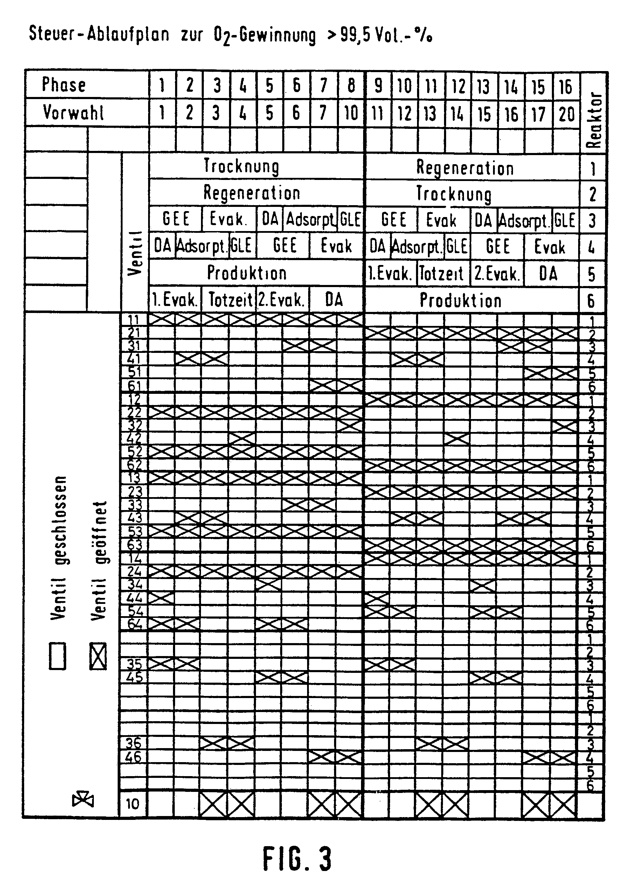

In Fig. 2 ist ein genaues Fließbild der Anlage wiedergegeben, während die Fig. 3 die Arbeitsweise dieser Anlage aufzeigt. Die Anlage enthält die Adsorber 1 bis 6, wobei die Adsorber 1 und 2 die Trocknungsstufe darstellen. Sie sind mit Adsorptionsmittel zur Wasserdampfaufnahme, wie beispielsweise Silicagel oder Aluminiumoxid, gefüllt. Die Adsorber 3 und 4 dienen der Anreicherung an Sauerstoff und der Verringerung an Argon im Gasstrom. Sie enthalten ein Kohlenstoff-Molekularsieb. Dann gelangt der Gasstrom über den Puffer-Behälter 16 in die Adsorber 5 und 6, die zur Entfernung des Stickstoffs aus dem Gasgemisch dienen und die mit einem zeolithischen Molekularsieb gefüllt sind.

Die Funktionsweise ist sehr komplex, da das in jeder der drei Stufen gewonnene Gas auf unterschiedliche Weise erhalten wird. Das getrocknete Gasgemisch verläßt die Trocknungsstufe während der Adsorptionsphase, das sauerstoffangereicherte, argonarme Gas wird in der Kohlenstoff-Molekularsiebstufe während der Desorptionsphase gewonnen. Die Stickstoffabtrennung erfolgt in der Zeolith-Molekularsiebstufe während der Adsorptionsphase. Die zeitlichen Rythmen der Druckwechseltrocknung sind im wesentlichen frei wählbar, d. h., sie sind nur den Anforderungen der Trocknung und der Forderung nach kontinuierlicher Lieferung von getrocknetem Gas in die nachfolgenden Stufen unterworfen. Die Kohlenstoff- und die Zeolith-Molekularsiebstufen sind zeitlich in der Weise aufeinander abgestimmt, daß in der Kohlenstoffmolekularsiebstufe zwei Zyklen ablaufen, während in der Zeolithstufe nur einer abläuft.

Nachfolgend wird die Funktionsweise unter Hinzuziehung der Fig. 3 im einzelnen beschrieben, wobei die Funktion der Adsorber 1 bzw. 2, 3 bzw. 4 und 5 bzw. 6 und der Ventilgruppen 11 bis 14 bzw. 21 bis 24, 31 bis 36 bzw. 41 bis 46, 51 bis 54 bzw. 61 bis 64 einander entsprechen. Die Funktionen werden jeweils nur an einem der Adsorber der jeweiligen Stufe und an den jeweils zugehörigen Ventilen erläutert.

In der Trocknungsstufe wird über Leitung 8 sauerstoffangereichertes Gas aus der Rückführleitung 15 mit Luft vermischt und über den Kompressor 7 auf erhöhten Druck gebracht. Dieses Gas strömt bei geöffneten Ventilen 13 und 11 durch den Adsorber 1, wobei Wasserdampf aus dem Gasgemisch vom Trocknunsgmittel aufgenommen wird. Während im Adsorber 1 die Gastrocknung abläuft, wird Adsorber 2 regeneriert. Hierzu werden zunächst die Ventile 22 und 24 gleichzeitig geöffnet, so daß sich der Druck im Adsorber entspannt und das Abgas über die Leitung 71 in die Umgebung abströmt. Gleichzeitig strömt Abgas über die Leitung 72 aus einem der beiden Adsorber 3 oder 4 durch das Ventil 22 in den Adsorber 2, so daß sich im Adsorber 2 der Druckabbau und die Spülung überlagern. Die Spülung erfolgt also mit einem trocknenen Gas aus dem Gesamtprozeß. Dieses fällt bei einem hohen Druck an, so daß bei der Entspannung von Adsorber 2 Gas nur über das Ventil 24 abströmt. Die Spülung wird nach einer vorgegebenen Zeit beendet. Dann beginnt die nächste Trocknungsphase, während Adsorber 1 regeneriert wird.

In der folgenden Kohlenstoff-Molekularsiebstufe erfolgt die Sauerstoffanreicherung und Argonverringerung des trockenen Gasgemisches. Die Zufuhr erfolgt über Leitung 73 über ein Ventil 33 in Adsorber 3 bei gleichzeitig geöffnetem Ventil 31 (Phase 6 und 7 in Fig. 3) (zu Beginn dieses Vorganges liegt Adsorber 3 bei Normaldruck vor). Während der Durchströmung mit Gas erhöht sich der Druck bis auf den Adsorptionsdruck, der über 4 bar liegt. Dies wird durch eine einstellbare Drosselung nach Ventil 31 erreicht. Das über dieses Ventil abströmende Gas ist verarmt an Sauerstoff, der im Adsorber 3 zurückgehalten wird. Dieses Gas stromt über Leitung 72 in den Trocknungsadsorber 1 oder 2, der gerade regeneriert wird. Nach einer vorgegebenen Zeit wird die Beladung von Adsorber 3 abgebrochen.

Danach erfolgt eine Gleichstromentspannung, zu der Ventil 32 geöffnet wird, während die Ventile 31 und 33 - 36 am Adsorber 3 geschlossen sind. Das Gleichstromentspannungsgas ist nur in geringerem Maß an Sauerstoff angereichert und strömt über Leitung 74 ab, worauf es über die Rückführleitung 15 dem Rohgas in Leitung 8 wieder zugemischt wird. Auch die Gleichstromentspannung wird nach einer vorgegebenen Zeit abgeschlossen, wenn in Adsorber 3 ein Druck zwischen dem Maximaldruck bei der Beladung und dem Umgebungsdruck vorliegt. Diese Arbeitsweise führt während der nachfolgenden Schritte zu einer besonders hohen Anreicherung an Sauerstoff bei gleichzeitig sehr geringen Argongehalten des Gases.

In den nachfolgenden Schritten der Gegenstromentspannung und der Evakuierung wird also ein sauerstoffangereichertes Gas gewonnen. Hierbei strömt zunächst über das Ventil 35 und die Leitung 75, den Pufferbehälter 16 sowie die Leitung 76 das Gas aus dem Adsorber 3 in die Zeolith-Molekularsiebstufe.

Dabei verringert sich der Druck im Adsorber 3 vom Enddruck der Gleichstromentspannung bis auf einen Druck nahe des Umgebungsdrucks. Auch die Gegenstromentspannung wird nach einer vorgegebenen Zeit abgeschlossen. Danach erfolgt eine Evakuierung des Adsorbers 3, wozu Ventil 36 geöffnet wird. Über die Leitung 79 saugt die Vakuumpumpe 9 Gas aus dem Adsorber 3 und drückt dieses Gas über die Leitungen 80, 82 und 76 über ein Ventil 10 sowie einen Pufferbehälter 16 in die Zeolith-Molekularsiebstufe.

Dieses Gas hat einen noch höheren Sauerstoffgehalt und einen ebenfalls geringeren Argongehalt als das bei der Gegenstromentspannung freigesetzte Gas.

Nach der Evakuierung beginnt ein Druckaufbau auf Normaldruck des Adsorbers 3. Das dazu erforderliche Gas wird während einer der Evakuierungsphasen eines nachgeschalteten Zeolithadsorbers (wie unten nochmals für die Betriebsführung der Zeolithadsorber ausgeführt wird) gewonnen: Aus Adsorber 5 wird über Ventil 54 ein Gas mit einem höheren Sauerstoffgehalt (als das über Kompressor 7 bereitgestellte Gas) durch die Vakuumpumpe 9 abgesaugt und über Leitung 80, Ventil 10, Leitung 81 und Ventil 34 in Adsorber 3 gefördert. Danach beginnt der nächste Zyklus mit der Beladung. Die Adsorber 3 und 4 arbeiten zeitlich so versetzt, daß eine kontinuierliche Beschickung der Zeolithstufe mit sauerstoffangereichertem Gas erfolgt. Diese erfolgt in der Weise, daß sich der Gegenstromentspannung und anschließenden Evakuierung des Adsorbers 3 die Gegenstromentspannung und Evakuierung des Adsorbers 4 unmittelbar anschließen.

4

In der folgenden Zeolith-Molekularsiebstufe wird der Restgehalt an Stickstoff aus dem Gasgemisch entfernt. Hierbei ist die Taktzeit der Zeolithstufe doppelt so lang wie die Taktzeit der Kohlenstoff-Molekularsiebstufe. Das hat zur Folge, daß die Beladung eines Zeolithadsorbers über einen gesamten Druckwechselzyklus der Kohlenstoff-Molekularsiebstufe erfolgt. Das Gleiche gilt für die Regenerierung der Zeolithstufe.

Die Beladung der Zeolithstufe erfolgt in der Weise, daß der zunächst mit Sauerstoffreichgas auf einen Druck, der dem Umgebungsdruck entspricht, gefüllte Adsorber 5 mit Gasen durchströmt wird, die bei einem vollen Zyklus der Kohlenstoff-Molekularsiebstufe als sauerstoffangereicherte Gase anfallen.

Die Beladung wird zu einem vorgegebenen Zeitpunkt, der durch die Länge des gesamten Druckwechselzyklus der Kohlenstoff-Molekularsiebstufe bestimmt ist, abgebrochen. Am Ende dieser Beladung sind daher noch keine Spuren von Stickstoff durch den Adsorber 5 durchgebrochen. Während der Beladung strömt also über Leitung 76 sowie das Ventil 53 sauerstoffangereichertes Gas in den Adsorber 5 und Sauerstoffreichgas verläßt den Adsorber 5 über Ventil 52 und Leitung 77. Zur Regeneration wird der Adsorber 5 mit der Vakuumpumpe 9 evakuiert. Da die Vakuumpumpe 9 aber gleichzeitig für die Evakuierung der Adsorber 3 und 4 verwendet wird, steht sie für die Evakuierung der Adsorber 5 und 6 nur dann zur Verfügung, wenn sie für die Adsorber 3 und 4 nicht benötigt wird. Dies hat zur Folge, daß die Evakuierung der Adsorber 5 und 6 jeweils kurzzeitig unterbrochen werden muß. Einer Evakuierung bei geöffnetem Ventil 54 schließt sich daher eine Totzeit an, die der Länge einer Evakuierungsphase der Adsorber 3 oder 4 entspricht. Danach wird Adsorber 5 bei geöffnetem Ventil weiter evakuiert.

Das Gas, das aus dem Adsorber 5 mit der Vakuumpumpe 9 abgesaugt wird, enthält mehr Sauerstoff als das Rohgas. Es wird deshalb über das Ventil 10 und die Leitungen 80 und 81 zum Druckaufbau der jeweiligen Adsorber 3 und 4 der Kohlenstoffmolekularsiebstufe verwendet. Überschüssiges Gas kann über Leitung 15 zur Zeitung 8 strömen und gelangt somit vor den Kompressor 7, von dem es wieder in den Prozeß gedrückt wird. Nach dem Abschluß der Evakuierung des Adsorbers 5 erfolgt ein Druckaufbau mit Sauerstoffreingas. Dazu strömt produziertes Sauerstoffreingas aus dem Druckaufbauspeicher 17 über die Leitung 78 bei geöffnetem Ventil 51 in den Adsorber 5. Der Druckaufbau ist nach einer vorgegebenen Zeit abgeschlossen. Dann liegt der Druck im Adsorber 5 etwa bei Umgebungsdruck.

Die Ergebnisse eines Ausführungsbeispieles der Sauerstoffgewinnung in der vorstehend beschriebenen Anlage gemäß Fig. 2 und 3 werden abschließend tabellarisch zusammengestellt.

Ausgangsgas: Luft mit rel. Feuchtigkeit von 65 %, Temperatur von 23°C und einem Druck von 1010 mbar
Produktgas: Sauerstoffgehalt 99,6 Vol.-% und Argongehalt 0,4 Vol.-% bei einer rel. Feuchtigkeit von 0,01 %, Temperatur von 24°C und einem Druck von 1030 mbar. Die Produktgasmenge beträgt 6,0 $m^3$/h (i. N.)

Adsorber:
1. Trocknungsstufe:
Adsorptionsmittel Silicagel in einem Volumen von 94 l bei einem Betriebsdruck für die Trocknung von 8,0 bar und für die Regeneration von 1025 mbar und einer Zykluszeit von 7,5 min.

2. Kohlenstoffmolekularsiebstufe:
Adsorptionsmittel Kohlenstoffmolekularsiebkoks CMSN2 in einem Volumen von 94 l bei einem Betriebsdruck für die Beladung von 7,95 bar und für die Evakuierung von 40 mbar und einer Zykluszeit von 1,5 min.
Die durchschnittliche Zusammensetzung der Gasteilströme beträgt:

| | | | |
|---|---|---|---|
| a) | Beladungs-Abgas | 14,5 Vol.-% $O_2$, | 1,2 Vol.-% Ar |
| b) | Gleichstromentspannung | 28,0 Vol.-% $O_2$, | 0,7 Vol.-% Ar |
| c) | Gegenstromentspannung und Evakuierung | Ø 72 Vol.-% $O_2$ | 0,28 Vol.-% Ar |

3. Zeolithmolekularsiebstufe:
Adsorptionsmittel Zeolith 13 X in einem Volumen von 125 l bei einem Betriebsdruck für die Beladung von 1,2 bar und für die Evakuierung von 40 mbar und einer Zykluszeit von 3 min.
Die durchschnittliche Zusammensetzung der Gasteilströme beträgt:

| | | | |
|---|---|---|---|
| e) | Beladungsgas (Vorprodukt) | 72 Vol.-% $O_2$, | 0,28 Vol.-% Ar |
| f) | Produktgas | 99,6 Vol.-% $O_2$, | 0,4 Vol.-% Ar |
| g) | Evakuierung | 64 Vol.-% $O_2$, | 0,25 Vol.-% Ar |

**Patentansprüche**

1. Verfahren zur Gewinnung von Sauerstoff mit einem geringen Argon-Anteil aus Luft unter Verwendung von zwei im Druckwechselbetrieb betriebenen, jeweils mindestens zwei Adsorptionsbetten aufweisenden, hintereinandergeschalteten Adsorptionseinheiten, nämlich einer ersten Kohlenstoffmolekularsieb-Adsorptionseinheit und einer zweiten Zeolithmolekularsieb-Adsorptionseinheit, deren Arbeitszyklen jeweils eine Beladungs- und eine Desorptionsphase umfassen, wobei aus der ersten Adsorptionseinheit ein Zwischenprodukt mit gegenüber dem ursprünglichen Gasgemisch erhöhtem Sauerstoff-, jedoch einem verringerten Argonanteil, während der Desorption gewonnen und der zweiten Adsorptionseinheit zugeführt wird, aus welcher ein Produkt mit noch weiter erhöhtem Sauerstoffgehalt gewonnen und der Stickstoff entfernt wird, während aus der zweiten Adsorptionseinheit jeweils in der Beladungsphase das Produktgas und in der Desorptionsphase ein Nebenprodukt gewonnen wird, dadurch gekennzeichnet, daß in der zweiten Adsorptionseinhet die Adsorptionsbetten in Zyklen mit der doppelten Dauer wie die Zyklen der Adsorptionsbetten in der ersten Adsorptionseinheit betrieben werden, wobei die Regenerierung der zweiten Adsorptionseinheit unterbrochen wird, während mit einer gemeinsamen Vakuumpumpe für beide Adsorptionseinheiten die erste Adsorptionseinheit regeneriert wird.

2. Verfahren nach Anspruch 1, dadurch gekennzeichnet, daß die mehr Sauerstoff und weniger Argon als Luft enthaltenden Abgase in den Prozeß zurückgeführt werden.

3. Verfahren nach Anspruch 1 bis 2, dadurch gekennzeichnet, daß der ersten Adsorptionseinheit eine Trocknungseinheit vorgeschaltet ist, die im entspannten Zustand mit einem Abgas aus der Kohlenstoffmolekularsieb-Adsorptionseinheit regeneriert wird, während in diese erste Adsorptionseinheit das getrocknete Gasgemisch gelangt.

4. Verfahren nach Anspruch 1 bis 3, dadurch gekennzeichnet, daß das Abgas aus der ersten Adsorptionseinheit während der Gleichstromentspannung vor den Kompressor zurückgeführt wird, bis in der Kohlenstoffmolekularsieb-Adsorptionseinheit ein Druck zwischen dem Beladungs- und Umgebungsdruck liegt.

## Claims

1. A method for producing oxygen with a low content of argon from air by using two series-connected adsorption units, namely a first carbon molecular sieve adsorption unit and a second zeolite molecular sieve adsorption unit, which are operated with pressure swing and which each comprise at least two adsorption beds, the operating cycles of the units comprising a charging phase and a desorption phase in each case, an intermediate product, which has an increased oxygen content but a reduced argon content compared with the original gas mixture, being obtained from the first adsorption unit during the desorption and being supplied to the second adsorption unit, from which a product with a further increased oxygen content is obtained and the nitrogen is removed, the product gas being obtained from the second adsoption unit in the charging phase and a by-product being obtained in the desorption phase, characterised in that in the second adsorption unit the adsorption beds are operated in cycles which are twice as long as the cycles of the adsorption beds in the first adsorption unit, the regeneration of the second adsorption unit being interrupted, whilst the first adsorption unit is regenerated by means of a vacuum pump which is common to both adsorption units.

2. A method according to claim 1, characterised in that the waste gases which contain more oxygen and less argon than air are fed back into the process.

3. A method according to claims 1 to 2, characterised in that a drying unit is arranged upstream of the first adsorption unit, which drying unit is regenerated in the pressure released state with a waste gas from the carbon molecular sieve adsorption unit, whilst the dried gas mixture passes into the first adsorption unit.

4. A method according to claims 1 to 3, characterised in that the waste gas from the first adsorption unit is fed back during the parallel flow pressure release to the compressor, until there is a pressure in the carbon molecular sieve adsorption unit which lies between the charging pressure and ambient pressure.

## Revendications

1. Procédé d'obtention d'oxygène à faible teneur en argon, au départ d'air, en recourant à l'emploi de deux unités d'adsorption raccordées à la suite l'une de l'autre, exploitées sous le régime des variations ou alternances de pression, présentant chacune au moins deux lits d'adsorption, à savoir une première unité d'adsorption à tamis moléculaire carboné et une seconde unité d'adsorption à tamis moléculaire zéolitique, dont les cycles de travail comportent chacun une phase de chargement et une phase de désorption, où, à partir de la première unité d'adsorption, on obtient, au cours de la désorption, un produit intermédiatre à teneur accrue en oxygène mais cependant réduite en argon par rapport au mélange gazeux de régime, produit intermédiaire que l'on envoie dans la seconde unité d'adsoprtion, à partir de laquelle on récupère un produit à teneur encore davantage accrue en oxygène et on élimine l'azote, cependant qu'à partir de la seconde unité d'adsorption on obtient chaque fois le gaz produit dans la phase de chargement et un produit secondaire dans la phase de désorption, caractérisé en ce que, dans la seconde unité d'adsorption, on exploite les lits d'adsorption en cycles d'une durée double de celle des cycles des lits d'adsorption dans la première unité d'adsorption, et on interrompt la régénération de la seconde unité d'adsorption, cependant que l'on procède à la régénération de la première unité d'adsorption à l'aide d'une pompe à vide commune aux deux unités d'adsorption.

2. Procédé suivant la revendication 1, caractérisé en ce que l'on recycle les gaz résiduaires contenant plus d'oxygène et moins d'argon que l'air.

3. Procédé suivant les revendication 1 et 2, caractérisé en ce que la première unité d'adsorption est précédée d'une unité de séchage que l'on régénère, à l'état détendu, avec un gaz résiduaire provenant de l'unité d'adsorption à tamis moléculaire carboné, cependant que le mélange gazeux séché parvient dans la première unité d'adsorption.

4. Procédé suivant les revendications 1 à 3, caractérisé en ce que l'on recycle le gaz résiduaire provenant de la première unité d'adsorption en avant du compresseur, au cours de la détente à équicourant, jusqu'à ce que règne dans l'unité d'adsorption à tamis moléculaire carboné une pression intermédiaire entre la pression de chargement et la pression de l'environnement.

Fließschema zur Reinstsauerstoff - Gewinnung

15

Luft

Kompressor

8

7

Trocken-
Einheit

Abgas

CMS-
Einheit

ZMS-
Einheit

17

Produkt

Vak.-Pumpe

9

10

FIG. 1

0 157 939

Druckwechsel-Verfahren zur $O_2$-Gewinnung > 99,5 Vol %

FIG. 2

0 157 939

Steuer-Ablaufplan zur $O_2$-Gewinnung > 99,5 Vol.-%

| Phase | | | 1 | 2 | 3 | 4 | 5 | 6 | 7 | 8 | 9 | 10 | 11 | 12 | 13 | 14 | 15 | 16 | Reaktor |
|---|---|---|---|---|---|---|---|---|---|---|---|---|---|---|---|---|---|---|---|
| Vorwahl | | | 1 | 2 | 3 | 4 | 5 | 6 | 7 | 10 | 11 | 12 | 13 | 14 | 15 | 16 | 17 | 20 | |
| | | | | | | | | | | | | | | | | | | | |
| | | | Trocknung | | | | | | | | Regeneration | | | | | | | | 1 |
| | | | Regeneration | | | | | | | | Trocknung | | | | | | | | 2 |
| | | Ventil | GEE | | Evak. | | DA | Adsorpt. | GLE | GEE | | Evak | | DA | Adsorpt. | GLE | | | 3 |
| | | | DA | Adsorpt. | GLE | GEE | | | Evak | DA | Adsorpt. | GLE | GEE | | | Evak | | | 4 |
| | | | Produktion | | | | | | | | 1.Evak. | Totzeit | 2.Evak. | | DA | | | | 5 |
| | | | 1.Evak. | Totzeit | 2.Evak. | | DA | | | | Produktion | | | | | | | | 6 |

FIG. 3

5